# EUROPEAN PATENT APPLICATION

(11) **EP 3 001 223 A1**
(43) Date of publication of application: **30.03.2016**
(21) Application number: 13186009.0
(22) Date of filing: 25.09.2013
(51) Int. Cl.: G01S 15/89, G01S 7/52, G06T 5/50

(54) **Method for detecting and correcting artifacts in ultrasound imaging data**

(71) Applicant: CureFab Technologies GmbH, 80637 München (DE)
(72) Inventor: Wittmeier, Sebastian, 80634 Munich (DE); Runyan, Brent J., 80799 Munich (DE); Frerix, Thomas, 80803 Munich (DE)
(74) Representative: Vossius & Partner Patentanwälte Rechtsanwälte mbB

(57) **Abstract**

The present invention relates to a method for detecting and correcting artifacts in ultrasound imaging data.

## Description

The present invention relates to a method for detecting and correcting artifacts in ultrasound imaging data. When ultrasound imaging data are being recorded, various artifacts can perturb the image and negatively affect image quality. Such artifacts may, e.g., arise from partial or total shadowing, reflections, refractions and/or sonic scaling.

It is thus an object of the present invention to provide a method for detecting and correcting artifacts in ultrasound imaging data which improves the image quality of the corrected ultrasound imaging data as compared to known techniques. This object is achieved with a method according to claim 1. Preferred embodiments are described in the dependent claims.

The inventive method for detecting and correcting artifacts in ultrasound imaging data comprises the following steps: At least two data sets achieved by ultrasound imaging are provided, wherein a first data set comprises imaging data taken from a first direction or direction interval and a second data set comprises imaging data taken from a second, different direction or direction interval. The relative pose information between the first data set and the second data set is provided and/or calculated. Then, corresponding data points in the first data set and the second data set are identified using the relative pose information. By analyzing the corresponding data points one or more artifacts in at least one of the data sets are being identified. The first and second data sets are then combined to generate a sonogram wherein the one or more artifacts are corrected.

In other words, the present invention is based on the idea that image artifacts or defects can be better or more accurately identified or detected if a region of interest is imaged from two different directions, i.e. two positions of the transducer element such that the emitted ultrasound rays have a minimum relative angle of 10°, or direction intervals, i.e. a grouping of different directions within a predefined angular interval. Using image data taken from two different directions and comparing these with each other allows for identifying data points or data regions belonging to an artifact or defect. If said artifact is only present in one of the two data set, the defective data points or data regions in said data set may be supplemented or replaced with data points or data regions of the other of the two data sets. This allows to correct or even entirely eliminate the artifacts. Of course, the inventive method may be advantageously performed with more than two data sets taken from several different directions or direction intervals in order to further improve image quality. For example, ultrasound imaging data achieved by a scan or sweep with an ultrasound probe may comprise data taken from several different directions. Performing the inventive method with basically each data set corresponding to one of these directions may greatly enhance the efficiency of the inventive method, because a defect or artifact which may even be present in the first and second data set may not be present in a third, fourth or fifth data set and so on.

Accordingly, the step of providing at least two data sets achieved by ultrasound imaging will typically consist of providing one data set which comprises several subsets taken from several different directions or direction intervals. In this case, the step of providing at least two data sets further comprises the step of identifying these two data sets corresponding to a first direction and a second direction, respectively, within the one data set. Depending on the technique with which the data have been taken, the first and second data sets comprise imaging data taken from first and second directions, respectively, or from first and second direction intervals, respectively. Some ultrasound probes generate a plane ultrasound wave emitted basically in a single direction, e.g. linear transducers, whereas other ultrasound probes emit ultrasound waves at certain direction intervals, e.g. sector/convex transducers. In the former case, the term "different direction" refers to the difference between the first and second directions, which would preferably be at least 10°, more preferably at least 20° and most preferably at least 30°. In the latter case, the first and second data sets each cover a certain direction interval, which preferably covers an angular range between 10° and 20°. Different first and second direction intervals are then understood to relate to direction intervals, where the relative angle between the boundaries of the intervals is preferably at least 10°, more preferably at least 20° and most preferably at least 30°. The relative pose information between the first and second data sets allows for relating each data point of the first data set with respect to each data point of the second data set within 3D space. For example, the first and second data sets may each cover a certain volume in 3D space. The relative pose information allows for relating these volumes to each other in terms of translation and rotation. This relative pose information may be either provided or calculated. For example, imaging data may be taken with an ultrasound probe that is tracked in 3D space. This allows for storing pose information together with the imaging data. In this case, the step of providing the relative pose information between the first data set and the second data set may be part of the step of providing at least two data sets achieved by ultrasound imaging, because the pose information is part of these two data sets. Alternatively or in addition, the relative pose information may be calculated by comparing the two data sets. Performing, e.g., a rigid spatial registration and/or a continuous deformable registration allows for identifying corresponding data points in the first and second data sets which allows for calculating the relative pose information between the two data sets. In the latter case, the steps of calculating the relative pose information and identifying corresponding data points may be reversed or take place within one and the same process step. Of course, the identification of corresponding data points in the first and second data sets requires that the first and second data sets at least partially overlap in 3D space. The inventive method basically only allows for identifying and correcting artifacts which are present in a space region belonging to both the first and second data sets.

Analyzing the corresponding data points in the first and second data sets allows for identifying one or more artifacts or defects in at least one of the data sets. Of course, there may be several artifacts present in each of the two data sets. These artifacts may belong to the same type of artifact or to different types of artifact.

Finally, the first and second data sets are combined to generate a sonogram wherein the one or more artifacts are corrected. In the context of the present invention, "combining" comprises taking data from the first data set and from the second data set and combining these data as well as correcting data points or data regions in one of the two data sets using information from the other of the two data sets and using the corrected one of the two data sets to generate a sonogram. In other words, the corrected sonogram may be achieved by first correcting one or more artifacts in one or both of the first and second data sets and subsequently combining the corrected first and second data sets. Alternatively, the correction may take place by means of combining first and second data sets and, e.g., disregarding data points in either of the two data sets belonging to an artifact.

The inventive method may be used for different types of artifacts or defects. In particular, the inventive method may be used for total or partial shadowing, reflections, refractions and sonic scaling. Of course, the inventive method is not limited to these artifacts. Moreover, a combination of several of these artifacts may be identified and corrected using the inventive method. For this purpose, the steps of identifying the artifacts and correcting the artifacts may be performed several times in a different manner for different types of artifacts. The most important artifacts will be defined and explained below:

The most important artifacts may be separated into two categories: stationary artifacts and mobile artifacts. Stationary artifacts are, e.g., caused by shadows and reflections. The mobile artifacts are, e.g., caused by sonic scaling and refraction.

Stationary artifacts are so called because they can be detected by comparing data sets of the same region of space taken from different directions. Either the object being scanned, or its effect, is present in the data set to some degree, or it is not. If it is present to any degree in either of the two data sets, then it is in the same location in both data sets. This is to be contrasted by mobile artifacts which will appear (possibly) warped and in a different location in each of the data sets.

The acquisition of the provided data sets occurs by scanning the same region of the object (region of interest) from different positions or direction. The scanning procedure (acquisition of a single data set) could be either (but is not limited to) a freehand sweep of a tracked 2D probe, a stationary sweep of a 3D probe or a freehand sweep of a 3D probe. The difference in orientation between the first and second data sets is preferably sufficiently large so that it would have been impossible to generate both data sets from a single position and orientation of the probe and merely adjusting the direction angle of the transducer elements, either mechanically or electronically. Preferably the angular difference should be at least 10°.

*Total Shadowing* is a lack of any ultrasound information in a given region of the ultrasound data set. It is typically caused by an obstruction (such as, e.g., air, calcium, or bones) that does not allow any of the sound waves to pass due to total reflection and/or absorption. According to a preferred embodiment of the invention shadow regions in a single data set are detected. A shadow typically extends from the obstruction to the image boundary in the direction of propagation of the sound waves. Regions of total shadowing are preferably detected by analyzing each ray beginning from the bottom of the ultrasound data set toward the source at the transducer, since the shadows are caused by the total reflection and/or absorption of the sound waves by the obstacle, causing a region of total sonic 'darkness' after the obstacle along the scan line emanating from the transducer element. Regions of total shadowing are preferably determined by comparing the intensity values along the ray with global intensity properties as well as values on neighboring rays. It is advantageous to compare the value of the data points to values of near data points along neighboring scan lines to rule out anomalous high values caused by noise. That is to say, in regions of total shadowing, the intensity values will be high not only on the scan line itself, but on neighboring scan lines as well. This is due to amplification or time gain compensation. Also it is advantageous to compare the value of the data points to values along the ray to rule out anomalous high values caused by noise. According to a preferred embodiment of the invention, an artifact caused by total shadowing is corrected by filling in the shadow region using image data from another direction, i.e. from the data set not containing the shadow.

*Partial Shadowing* is a decrease in the intensity of the ultrasound signal in a given region of the ultrasound image. It is caused by an obstruction that partially reflects and/or absorbs the sound waves. For example, the image of an object beyond an obstacle with 50% sonic transparency, will appear less intense than the image of the same object scanned from a different angle where the obstacle is not between the transducer array and the object being scanned. According to a preferred embodiment of the invention, partial shadowing may be detected by comparing, e.g., the intensity/brightness between corresponding regions or data points in the two data sets. In case of partial shadowing, the relative intensity of the structures within a region will be the same for both data sets, but the average intensity of the region will be different in both data sets. According to a preferred embodiment of the invention, an artifact caused by partial shadowing is corrected by filling in the shadow region using image data from another direction, i.e. from the data set not containing the shadow, and adjusting the intensity of the shadow region.

*Reflections* cause the presence of false information in the ultrasound data set. They are caused by the reflection of the sound waves at the interface of two media (e.g., tissue types) with different acoustic propagation velocities. The effect is the appearance of features or structures in the ultrasound data set at false locations. Reflections can be singular or multiple, depending on the nature and number of reflecting surfaces (tissue interfaces) in the region of the object being scanned. According to a preferred embodiment of the invention, an artifact caused by reflections may be identified by comparing overlapping regions in the two volumes corresponding to the two data sets. The difference between the two data sets basically relates to reflected features or structures. Regions of heterogeneous difference correspond to reflections. According to a preferred embodiment of the invention, an artifact caused by reflections may be corrected by removing the detected reflection and filling in missing information from another direction (without the reflection).

*Sonic Scaling* is the warping and displacement of information in ultrasound data sets in the direction of propagation of the sound waves. It is caused by assuming that the acoustic propagation velocity in the medium of the object being scanned is a specific constant, usually 1540 m/s. This assumption can be violated either by having assumed the wrong constant, or by having a varying speed of sound in the tissue of the object being scanned. According to a preferred embodiment of the invention, an artifact caused by sonic scaling may be identified by performing a continuous deformable registration between the two data sets. This allows for determining pairs of corresponding data points between the two data sets. If for each data set a linear deformation solely in the scan direction can be found, such that after the respective linear deformations are applied the corresponding pairs of data points are in the same location, preferably within a tolerance of the diameter of the focal zone, in space, then the difference between the data sets is determined to be caused by sonic scaling (This technique is also referred to as triangulation). According to a preferred embodiment of the invention, an artifact caused by sonic scaling may be corrected by performing a deformation along the scan lines of both data sets and combining the deformed data sets.

*Refractions* cause the warping and displacement of information in the ultrasound data sets in directions other than the direction of propagation of the sound wave. They are caused by the bending (or change in direction) of the sound waves at the interface of two media (e.g., tissue types) with different acoustic propagation velocities. The effect is the mis-registration of structures and/or features in the ultrasound data set. According to a preferred embodiment of the invention, an artifact caused by refractions may be identified by performing a continuous deformable registration. One preferably assumes that there are only two types of mobile artifacts, namely sonic scaling and refraction. Then, by ruling out sonic scaling as a possible cause for the deformation between the two data sets, one may conclude that the deformation is due to refraction.

The step of identifying corresponding data points in the first and second data sets preferably comprises using the provided relative pose data and/or performing a rigid spatial registration between the first and second data sets. Performing such a rigid spatial registration is well-known in the art and, e.g., described in Brown, A survey of image registration techniques, ACM Comput. Surv., Vol. 24, No. 4, 1992. Correcting the one or more artifacts in this case preferably comprises modifying the values of at least some of the corresponding data points in either or both of the first and second data sets.

The step of identifying the one or more artifacts preferably comprises analyzing data points along the first and second directions. In the case of first and second direction intervals preferably data points along first and second directions out of these first and second direction intervals are analyzed. Then, the position along the first and second directions, where the intensity values are below the noise level, is determined. This is particularly advantageous in the case where the artifact is caused by total shadowing.

Preferably, the step of identifying the one or more artifacts comprises analyzing data points for signal strength and/or signal-to-noise ratio and comparing the signal quality of the first data set with that of the second data set. This is particularly preferred in the case of the artifact being caused by noise.

Preferably, the one or more artifacts are corrected by replacing data points in one of the first and second data sets belonging to an artifact with corresponding data points of the other of the first and second data sets. This is, for example, advantageous in the case of total shadowing or noise, as the region of detected shadowing or noise may be filled in by combining it with information from the corresponding data points in the data set without the shadowing or noise.

Identifying the one or more artifacts preferably comprises determining which of the two data sets contains the one or more artifacts by determining the structure of regions of data points in the first and second data sets and/or deploying a statistical texture analysis, preferably by determining the edginess in a region of interest and/or a structure analysis, preferably by using Haralick texture features or wavelet decomposition. Preferably, the detected structures or the statistical properties within the region of both data sets are compared.

Preferably, the step of identifying the one or more artifacts comprises de-speckling and/or de-noising and subsequently determining a scaling parameter for the corresponding data points and statistically analyzing the distribution of the scaling parameter for a set of corresponding data points. The scaling parameter preferably comprises the quotient of the intensity values of corresponding data points. The quotients q of the values of corresponding data points may be taken to identify regions with no artifacts where the distribution of q is homogenous within the region and concentrated around a value of 1. In other words, the value 1 is contained in an interval of preferably 10% of the data points around the mean value m and the distribution is sharp. Regions of partial shadowing may be identified by identifying regions where the value of q is homogenous within the region and not concentrated around 1, i.e. 1 is not contained in an interval of preferably 10% of the data points around the mean value m and the distribution is sharp. Regions of reflection may be identified by identifying regions where the value of q is heterogeneous within the region, i.e., the distribution is not sharp.

Correcting the one or more artifacts preferably comprises increasing or decreasing the intensity of data points in the first and/or second data sets belonging to an artifact. For example, the intensity within a region of a detected shadow may be increased and/or filled in by combining it with information from the corresponding data points in the data set without shadowing. Or it may be decreased, where distal acoustic enhancement occurs. In case of a reflection, a corrected data set may be generated by removing the detected reflection and presenting a combination of the data sets in the region of a detected reflection. In addition or alternatively, information from the corresponding data points in the data set without the reflection may be used.

In a preferred embodiment of the present invention, identifying corresponding data points comprises performing a continuous deformable registration between the first and second data sets. Correcting the one or more artifacts may then be achieved by modifying the position of at least some of the corresponding data points. Performing a continuous deformable registration is well-known in the art and, e.g., described in Sotiras et al., Deformable Medical Image Registration: A Survey, Reserach Report No. 7919, 2012. The step of identifying the one or more artifacts in this case preferably comprises a triangulation of the corresponding data points. Preferably, the error of the triangulation is analyzed and the artifact is identified as sonic scaling if the error is less than or equal to a threshold. The threshold preferably is the diameter of the focal zone. If the error is larger than the diameter of the focal zone, the artifact may be identified as refraction. The error may be, e.g., determined by the method of least squares.

In case of sonic scaling, correcting the one or more artifacts preferably comprises performing a triangulation of the corresponding data points and providing a deformation of each data point to its estimated true position as determined by the triangulation. This may be achieved by, e.g., minimizing the triangulation error, wherein the error is preferably determined by the method of least squares.

According to a further preferred embodiment of the present invention, the step of correcting the one or more artifacts comprises determining which of the two data sets contains the one or more artifacts. Preferably, a deformation is applied to data points belonging to the one or more artifacts on the basis of the continuous deformable registration. For example, in case of an artifact caused by reflection, generating a corrected data set may comprise determining which of the two data sets contains the reflected image. The deformation is then applied to the region of reflection in the data set containing the reflected image. Preferably, a combination of the deformably corrected reflected image and the corresponding data points from the data set without the reflection is presented. In addition or alternatively, information from the corresponding data points in the data set without the reflection may be used.

Determining which of the two data sets contains the one or more artifacts preferably comprises providing a reference point, from whose direction a first data point in the first data set has been recorded, determining the distance of said first data point to this reference point and the distance of the corresponding data point in the second data set to this reference point and comparing these distances. The same may be performed vice versa with the first and second data set being exchanged. In other words, the object in question (region of interest) in image A may be transformed to the reference frame of image B and vice versa. Subsequently, it is determined which of the two objects is closest to the transducer in the respective reference frame. If an object is closest to the transducer in both reference frames, then it can be identified as the original object. Otherwise, the original object remains unidentified.

The analysis between the corresponding regions or corresponding data points of the at least two data sets preferably comprises analyzing one or a combination of the following parameters: intensity, contrast, speckle pattern, noise, image sharpness/blur, the position of one or more markers, the position of one or more detected anatomical and/or geometric features, the position and/or orientation of one or more detected edges and/or surfaces. Preferably, combining the first and second data sets to generate a sonogram comprises replacing data points in one of the first and second data sets belonging to an artifact with corresponding data points of the other of the first and second data sets and/or taking a weighted average of the two data sets and/or taking the maximum intensity from the two data sets and/or fusing the data sets based on local image quality and/or using all of the information in only one of the two data sets.

In case of the artifact being caused by reflection, it is preferred to determine the structure of the reflected object and the virtual object by preferably deploying statistical texture analysis, preferably by determining the edginess in the region of interest, i.e., quotient of the number of edge pixels and the total number of pixels in the region of interest and/or a structure analysis, preferably by using Haralick texture feature and/or wavelet decomposition. The technique of Haralick texture features is described, e.g., in Haralick et al., Textural Features for Image Classification, IEEE Transaction on System, Man and Cybernetics, Volume 3, Issue 6, 1973. The technique of wavelet decomposition is, e.g., described in Stephane Mallat, A Wavelet Tour of Signal Processing. Preferably, the detected structures or the statistical properties within the region of both data sets are compared.

A discrimination between a data set A that contains a superposition of two objects and a data set B that only contains one of those objects may be achieved by generating an adaptively thresholded binary image with non-zero values where the above-mentioned structures are present and subsequently applying a non-commutative operation to those binary images. One example for such a non-commutative operation is (A) AND (NOT B).

As outlined above, some method steps are particularly advantageous for detecting and/or correcting specific artifacts. Thus, these steps may be performed in a sequence to identify and correct different kinds of artifacts. One preferred order for detecting and correcting artifacts is the following: total shadowing, reflection, partial shadowing, sonic scaling, and refraction. Alternatively, any subsets of the artifacts may be detected and corrected iteratively in an arbitrary order.

Preferably, the steps are performed iteratively for positions at increasing distance along the direction of the ultrasound rays with fixed step size. Preferably, a field representation of the effects of the mobile artifacts is generated at a position and compensated for based on analysis of the following position.

The present invention further relates to an ultrasonic device for ultrasonic imaging comprising an ultrasound probe and a processor. The processor is adapted to perform the method steps discussed above with reference to the inventive method. The present invention further relates to a computer program adapted to perform the method of the present invention.

Preferred embodiments of the present invention will be further elucidated with reference to the following Figures, which show:
- Figs. 1a and 1c: schematically the scan lines for different ultrasound probes;
- Fig. 1b: the intensity distribution along a scan line of an ultrasound image;
- Figs. 1d to 1f: schematically the concept of shadowing;
- Fig. 1g: intensity reduction in the case of partial shadowing;
- Figs. 2a and 2b: schematically the detection of reflection;
- Fig. 2c: intensities for the combination of partial shadowing and reflection;
- Fig. 3: schematically the concept of sonic scaling;
- Fig. 4: schematically the concept of refraction detection;
- Fig. 5: triangulation error as a function of the relative angle;
- Fig. 6: schematically the minimum angle for artifact detection; and
- Fig. 7: a flowchart of a preferred embodiment of the present invention.

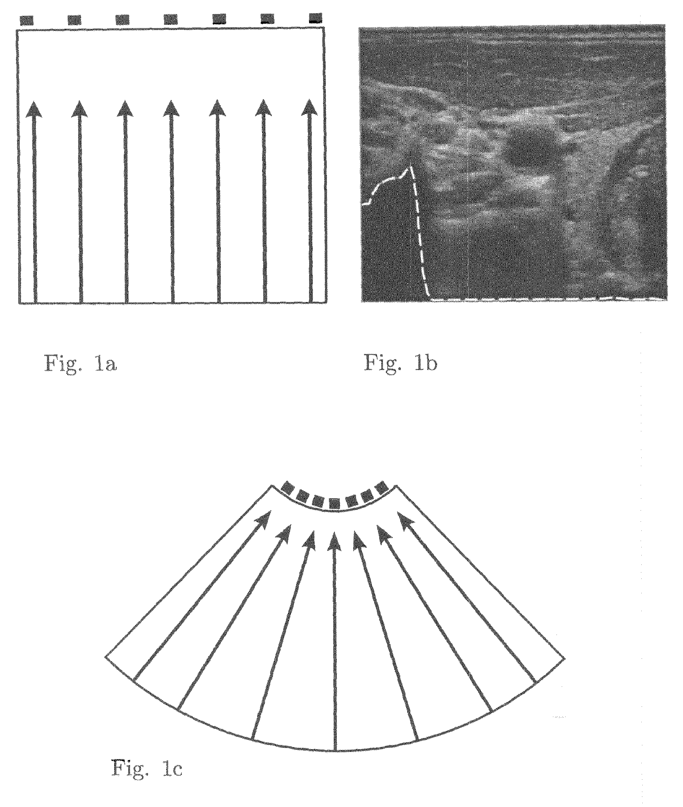

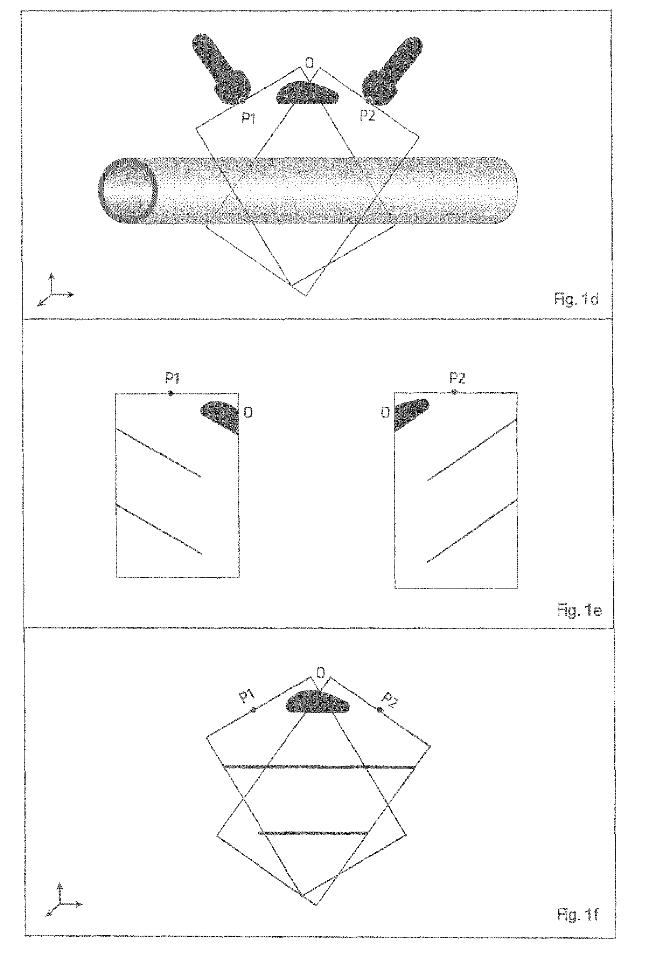

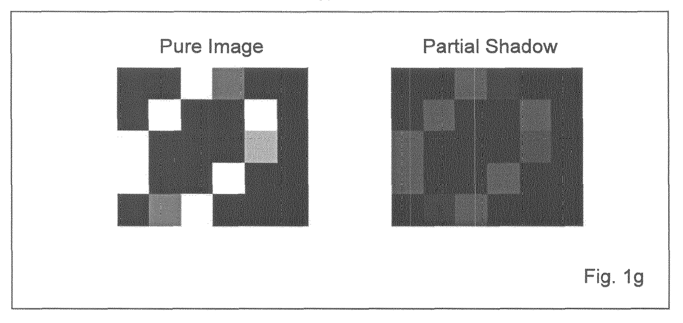

Total shadow detection can in fact be performed on a single data set. The shadows are caused, e.g., by the total reflection and/or absorption of the sound waves by an obstacle, and thus occur between the obstruction blocking the ultrasonic waves and the bottom of the ultrasound data set. The direction of the shadow depends on the direction of the scan. The regions of total shadowing are preferably detected by analyzing the data set along the scan lines starting from the bottom. This is illustrated in Figure 1.

Figures 1a and 1c schematically show the alignment of typical scan lines for different ultrasound probes, namely a linear transducer (1a) and a sector/convex transducer (1b). The arrows depict the direction of the ultrasound rays and the black squares the transducer elements. Figure 1b shows the measured intensity along one exemplary scan line. For each data point along that scan line, if the intensity is not greater than a certain threshold, then that point is considered to be in the shadow region. In the absence of noise a threshold of zero would be sufficient to determine whether a point is in a region of total shadowing, but since there a multiple sources of noise in an ultrasound data set, e.g. noise generated from the object being scanned itself, signal attenuation, gain, time-gain compensation, signal amplifiers, etc., one effective method of determining the threshold for a given point from a given data set is to consider the intensity values of near points on the other scan lines that are at the same distance from the bottom as the point being considered. The minimum value of these points can preferably be used as the threshold value determining the region of total shadowing. Another existing method for shadow detection is described in US 2012/0243757 A1.

When comparing two overlapping data sets taken from different directions, the regions of total shadowing in one particular data set will have little or no image information, but this information can be supplied in the combined data set by the image information in the other data set taken from a different direction. This is schematically illustrated in Figures 1d-1f: An object (in this case a tube) is imaged by the two ultrasound probes P1 and P2 from different directions. An absorbing object O causes a shadow in the images generated by the two probes as illustrated in Figure 1e (shadow: region without scan lines). However, combining the information generated by both probes, i.e. data points from both data sets, allows for covering the entire target volume as illustrated in Figure If.

Partial shadow detection can be preferably performed by comparing corresponding regions from the two data sets. The relative intensity within a given region will be the same for each data set, but in the data set with the partial shadowing the average intensity in that region will be less than in the data set without the shadow. A simulated intensity profile for a region of partial shadowing is shown in Fig. 1g, where the average intensity on the left (pure image) is increased as compared to the average intensity on the right (partial shadow).

There is no confusion between detecting reflections and detecting shadows, since for the case of shadows the intensity of the shadow region is very different between the two data sets, while for the region containing the reflection, the intensity between the two data sets will be very similar.

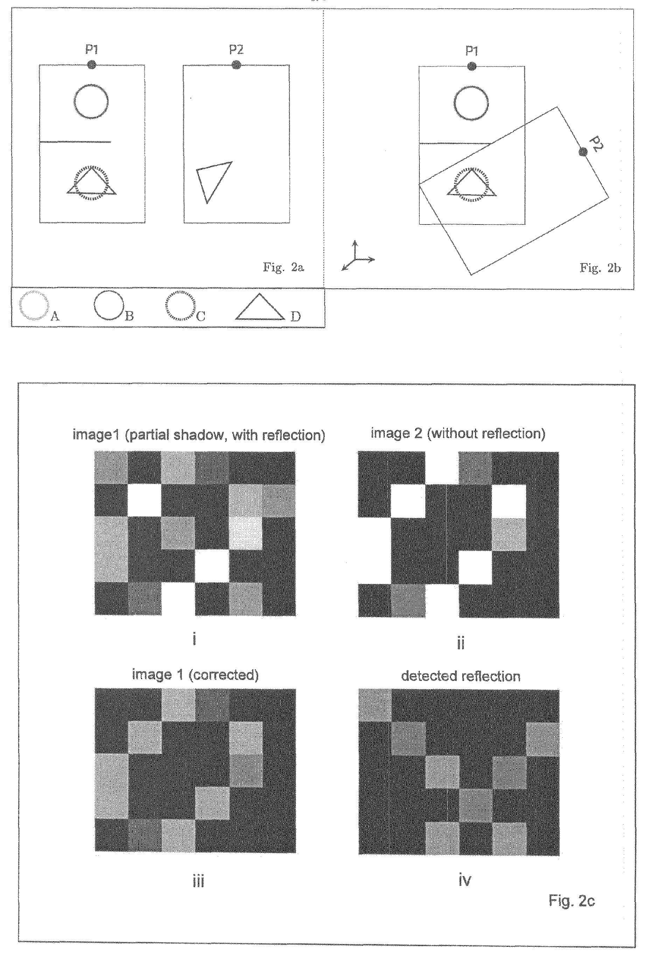

The artifact of reflection is schematically depicted in Fig. 2. Circles of type A correspond to the original object, circles of type B to its virtual object; note that in reference frame 1 (Fig. 2a), their positions are identical. Circles of type C depict the reflected image of circles of type A and the triangle D is the virtual image of an additional object recorded from the two ultrasound probes P1 and P2. Fig. 2b shows both data sets in a common reference frame (world coordinates). There are two preferred procedures by which the reflection perturbed image (in the following denoted as A) can be distinguished from the non-perturbed view (in the following denoted as B).

A first preferred embodiment relies on statistical texture analysis. In the region of interest (ROI), image A contains on average more edges, since it contains both structures. The two images can therefore be separated by determining their edginess through the following two steps:
1. edge detection algorithm
2. determine edginess of the ROI: edginess = edgepixels(ROI) / pixels(ROI)

Comparing the two values identifies A as the reflection perturbed image.

A second preferred embodiment relies on structure analysis. The two images' ROI differ in the structures that are present and therefore can be distinguished by methods that discriminate present structures against the background.

Two methods to discriminate image structures are:
1. *Haralick texture features:* There are altogether 14 features that can be derived from the local graylevel co-occurrence matrix of an image. Among them are features that depict the local degree of homogeneity, randomness, edginess, contrast and correlation. For every pixel the corresponding value is determined via a local neighborhood. One thus arrives at a representation of the size of the source image in which the structures are enhanced.
*2. Wavelet decomposition:* Image structures appear as enhanced features in the low frequency component of a wavelet decomposition. Similar regions (i.e. in frequency and space domain) can be subsequently clustered by an unsupervised k-means clustering algorithm and its classes depict common structures in the source image.

By the above methods, structures in images A and B can be detected and extracted since there remains a mapping between the feature images and the source image. One obtains two binary images A' and B' with non-zero values only where there are corresponding structures in the source image.

Finally, one can apply the following non-commutative operation on the binary images A' and B': (A') AND (NOT B') and vice versa. For those two operations, suppose (A') AND (NOT B') yields more non-zero pixels, then A is the reflection perturbed image and B is the original image. The unperturbed image B can be used for any subsequent analysis instead of image A. The method is analogous for multiple reflections (reverberations).

Fig. 2c shows a simulated example of a combined artifact of partial shadowing and reflection, where i) depicts the combination of the images ii) (partial shadow only) and iv) (reflection). The reflection corrected image is shown in Fig. 2c iii).

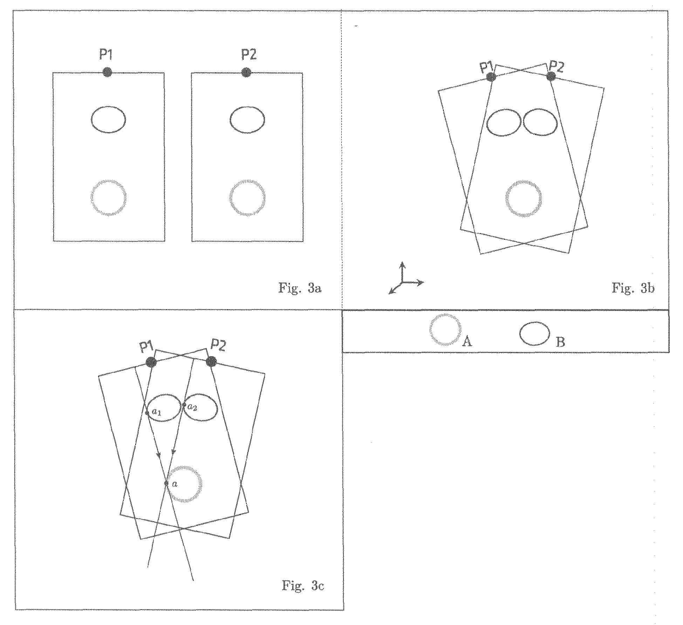

Ultrasound image data is generated from pulse-echo RF data under the assumption that the speed of sound is constant in the object being scanned, usually assumed to be 1540 m/s for human tissue. When scanning inhomogeneous objects, such as the human body with adjacent tissues having different acoustic propagation velocities, the resulting image information will be distorted (or scaled) in the direction of the sound propagation. This effect is referred to here as sonic scaling. This can be detected and compensated for by performing a continuous deformable registration between two data sets to identify corresponding points between the data sets, and then scaling each data set individually according to the principles of ultrasound physics, i.e. along the scan lines, until the two scaled data sets have a maximum correspondence. The procedure is shown in Fig. 3. Circles of type A correspond to the original object and ellipses of type B to the virtual object subject to sonic scaling. Fig. 3a shows the original objects and their virtual images in the two reference frames 1 and 2. Fig. 3b shows both datasets in a common reference frame (world coordinates). Fig. 3c depicts the triangulation of respective data points a1 and a2 in reference frames 1 and 2 that correspond to a point a on the original object. The correspondence of data points a1 and a2 is achieved by a continuous deformable registration between the two data sets. Subsequently, an optimized position a is determined by intersecting two lines in the scan directions of the data points a1 and a2, respectively, preferably within a tolerance of the diameter of the focal zone (not shown in the figure; in 3D two lines can be skewed and preferably the intersecting point is achieved by an error-minimizing-technique, preferably by using the method of least squares). Refraction occurs at the interface between two different media (tissues) with different acoustic propagation velocities. This results in a warped and displaced image in each of the two data sets. A correspondence of the image points between each data set can be determined by a continuous deformable registration. The determination of the effect as refraction can be made by ruling out the case of sonic scaling.

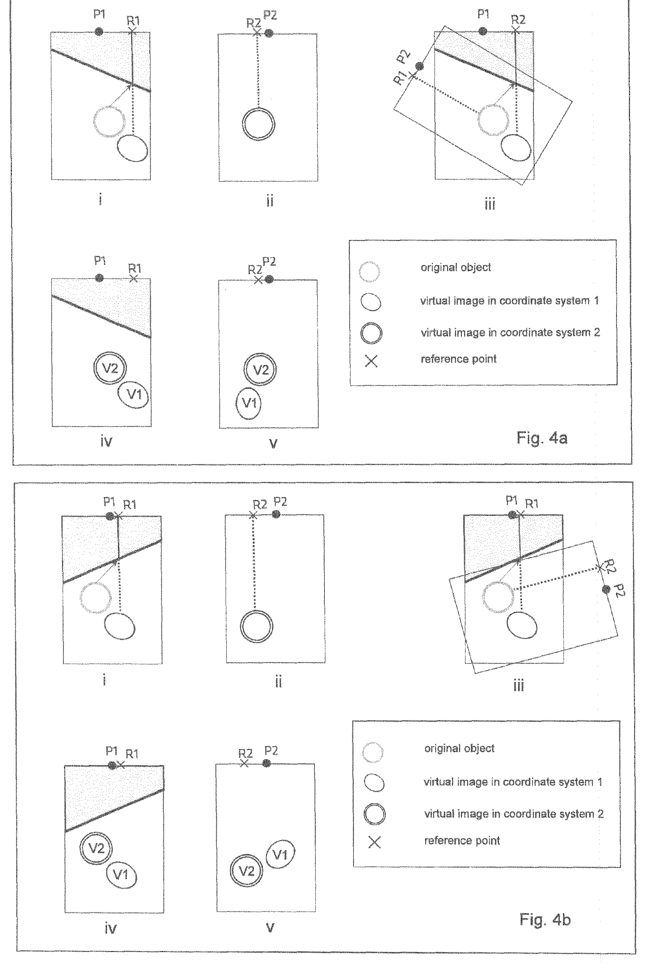

Figure 4 schematically depicts how to detect which of the two data sets contains the refracted image. Data points from P1 are subject to refraction; the original object (shaded circle) thus appears as a refraction-distorted virtual image (solid ellipsoid). For this purpose, the virtual object in both reference frames is copied to the other reference frame, respectively. Subsequently, the distance to a reference point (R1, R2 respectively), preferably corresponding to the position of the ultrasound probe during imaging, is measured. In Fig. 4a and Fig. 4b, image i) shows the data points taken from P1 as well as their ultrasound paths, ii) shows the data points taken from P2 as well as their ultrasound paths, iii) shows both data sets in a common reference frame (world coordinates) as well as their ultrasound paths, iv) shows both data sets in reference frame 1 and v) shows both data sets in reference frame 2. For the ultrasound paths, the continuous arrow depicts the refracted beam and the dashed line depicts the beam as observed from the respective reference point. Denote by V1 and V2 the virtual images in the respective reference frame and by D(Ri,Vj) the shortest distance from reference point Ri to virtual image point Vj. Then the following positive statement can be concluded: if D(R1,V2) is larger than D(R1,V1), then V2 cannot be the original image; if D(R2,V1) is larger than D(R2,V2), then V1 cannot be the original image. From this logic, the original object can be identified in some cases, but remains unidentified in others.

Two examples are shownn in Fig. 4. Fig. 4a shows the case, where V2 can be identified as the original image and Fig. 4b shows the case, where the original object remains undetermined because D(R1,V1) is larger than D(R1,V2) and D(R2,V2) is larger than D(R2,V1). This is due to the fact that a refracted object always appears further away from the reference point compared to the original object, because the refracted beam (arrows with continuous lines) causes the impression as if the beam was coming along the dashed line.

This logic can be extended to more than two data sets. The likelihood of identifying the original object is then increased thanks to more information from additional directions of observation.

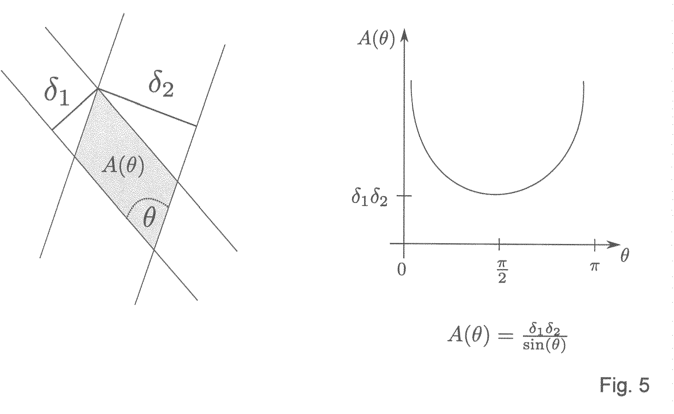

Figure 5 depicts the triangulation error as a function of the angle between the two directions of observation. It is a physical error due to fluctuations in the measurement process and the strictly positive focal zone of an ultrasound device. From the two ultrasound rays with error margins δ1 and δ2, one can deduce the error area of the triangulation which is proportional to the square of the triangulation error (note the dimensionality reduction). As can be seen, the triangulation error is a nonlinear function of the observation angle. This derivation suggests that a minimum angle of 10° between the directions of observation is advantageous to reduce this measurement error.

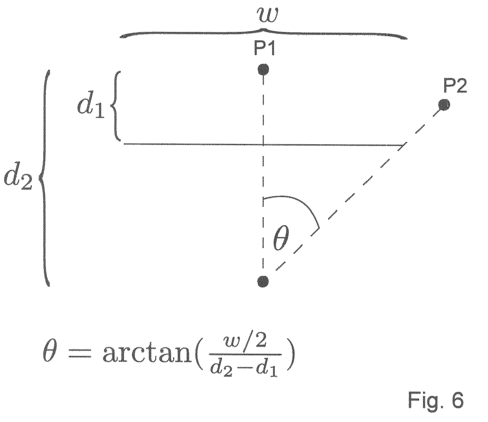

Fig. 6 emphasizes the advantage of a wide angle between the two directions of observation in order to scan around a reflecting or refracting or shadowing object of width w, which can be seen as the resolution of the invented method. Distance d1 is the distance from probe P1 to the object and distance d2 is the distance from P1 to the data point that needs to be corrected. The derived trigonometric identity suggests that an angle of at least 10° is preferred for a successful correction of one or more artifacts.

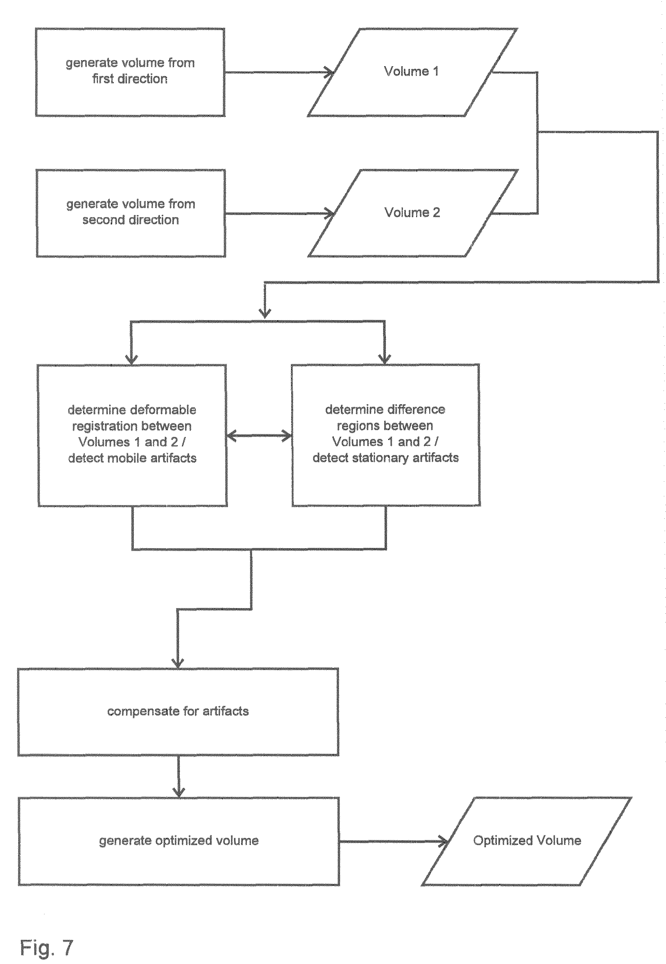

Fig. 7 schematically depicts the preferred order of implementation. The artifacts can be detected in any order and the detection methods can be applied iteratively. The preferred order of implementation is as follows:
1. Total shadow detection (can be performed on each data set separately)
2. Deformable registration (associates image points in one data set with image points in the other)
3. Reflection detection
4. Partial shadow detection
5. Sonic scaling
6. Refraction

Since the detection of total shadows can be performed on an individual data set alone, it is preferred to perform this step first. Identifying and omitting regions of total shadowing can result in a more accurate continuous deformable registration between data sets. One result of determining a continuous deformable registration between the data sets, is a mapping from the points in one data set to the points in the other data set. The mapping relates points that belong at the same actual location, even if the deformation has not yet placed those points in their correct actual location. Once this correspondence between the points of the two data sets has been made, the reflection detection and partial shadow detection can be performed, minimizing the error of comparing regions in the two data sets that do not in fact correspond. The sonic scaling correction can be performed last, since this has no direct effect on the comparison between the data sets, but only an effect on the display properties of the optimized combined data set.

When detecting artifacts within two spatially overlapping ultrasound data sets, the preferred first step is to detect the regions of total shadowing in each data set individually. This process is depicted in Figure 1b. A mask is created for each of the data sets, corresponding to the respective regions of total shadowing. This mask is used to ignore the regions of total shadowing when performing the deformable registration between the overlapping regions of the two data sets. The missing regions in each of the data sets can be filled in by the information from the same region in the other data set. This process is depicted in Figures 1d through 1f.

After the regions of total shadowing have been removed from each of the data sets individually, a deformable registration is preferably performed between the overlapping regions of the two data sets, associating the data points in one data set with the data points in the other. The deformable registration is performed based on geometric and anatomical features detected in each of the data sets as well as the intensity values of the data points.

Next the difference between the data sets is considered. In regions where the difference is close to zero (less than some predetermined tolerance) the data sets are considered identical. Preferably, one uses the provided relative pose information for this purpose. Regions of uniform difference correspond to partial shadowing. Regions of heterogeneous difference correspond to reflections, or incorrect deformation.

After the reflections have been detected and compensated for, the regions of partial shadowing are detected. In a region of partial shadowing, the intensity histogram should have the same frequency profile as the same region in the recording without the shadowing, but at a different scale along the bin axis (see Figure 1g for an example).

After reflections and partial shadows have been removed and a continuous deformable registration has been determined between the two data sets, there is a correspondence between the points of one data set and the points of the other data set. If the primary cause of the deformation between the data sets is sonic scaling, then drawing rays through corresponding points emanating from the transducer array elements in the direction of the scan lines will result in rays through corresponding points intersecting. This concept is illustrated in Figure 3c. The two data sets from different directions P1 and P2 are placed in their appropriate position and orientation in space. The deformation between them is determined. The points a1 and a2 are determined to be corresponding points by the deformation, that is they correspond to the same point in real space. In order to determine if the deformation is the result of sonic scaling alone, a ray is drawn through the points in the direction of the scan lines, that is emanating directly from the transducer element. Since these rays exist in 3-dimensional space it is not guaranteed that they will intersect. If they do in fact intersect, or at least come close enough for some well-defined threshold value, preferably the diameter of the focal zone, for all of the corresponding pairs of points between the data sets, then we conclude that the deformation was in fact caused by sonic scaling.

## Claims

1. Method for detecting and correcting artifacts in ultrasound imaging data, the method comprising the following steps:
a) providing at least two data sets achieved by ultrasound imaging, wherein a first data set comprises imaging data taken from a first direction or direction interval and a second data set comprises imaging data taken from a second, different direction or direction interval;
b) providing and/or calculating the relative pose information between the first data set and the second data set;
c) identifying corresponding data points in the first data set and the second data set, preferably using the provided and/or calculated relative pose information;
d) identifying one or more artifacts in at least one of the data sets by analyzing the corresponding data points; and
e) combining the first and second data sets to generate a sonogram wherein the one or more artifacts are corrected.

2. Method according to claim 1, wherein identifying corresponding data points comprises performing a rigid spatial registration between the first and second data sets and wherein correcting the one or more artifacts comprises modifying the values of at least some of the corresponding data points.

3. Method according to claim 1 or 2, wherein identifying the one or more artifacts comprises analyzing data points along the first and second directions and determining the position along the first and second directions where the intensity values are below the noise level.

4. Method according to any of the previous claims, wherein identifying the one or more artifacts comprises analyzing data points for signal strength and/or signal-to-noise ratio and comparing the signal quality of the first data set with that of the second data set.

5. Method according to any of the previous claims, wherein identifying the one or more artifacts comprises determining which of the two data sets contains the one or more artifacts by determining the structure of regions of data points in the first and second data sets and preferably deploying statistical texture analysis, preferably by determining the edginess in the region of interest and/or structure analysis, preferably by using Haralick texture features or wavelet decomposition, wherein preferably the detected structures or the statistical properties within the region of the two data sets are compared.

6. Method according to any of the previous claims, wherein identifying the one or more artifacts comprises determining a scaling parameter for the corresponding data points and statistically analyzing the distribution of the scaling parameter for a set of corresponding data points, wherein the scaling parameter preferably comprises the quotient of the intensity values of corresponding data points.

7. Method according to any of the previous claims, wherein correcting the one or more artifacts comprises increasing the intensity of data points in the first and/or second data sets belonging to an artifact..

8. Method according to any of the previous claims, wherein identifying corresponding data points comprises performing a continuous deformable registration between the first and second data sets and wherein correcting the one or more artifacts comprises modifying the position of at least some of the corresponding data points.

9. Method according to claim 8, wherein identifying the one or more artifacts comprises performing a triangulation of the corresponding data points and preferably comprises analyzing the error of the triangulation wherein the artifact is identified as sonic scaling if the error is less than or equal to a threshold, the threshold preferably being the diameter of the focal zone, and wherein the artifact is identified as refraction if the error is larger than the diameter of the focal zone.

10. Method according to claims 8 or 9, wherein correcting the one or more artifacts comprises performing a triangulation of the corresponding data points and providing a deformation of each data point to its estimated true position as determined by the triangulation.

11. Method according to claim 8 or 9 or 10, wherein correcting the one or more artifacts comprises determining which of the two data sets contains the one or more artifacts, applying a deformation to data points belonging to the one or more artifacts on the basis of the continuous deformable registrations.

12. Method according to claim 8 or 9 or 10 or 11, wherein determining which of the two data sets contains the one or more artifacts comprises providing a reference point, from whose direction a first data point in the first data set has been recorded, determining the distance of said first data point to this reference point and the distance of the corresponding data point in the second data set to this reference point and comparing these distances.

13. Method according to any of the previous claims, wherein the analysis between the corresponding regions of the at least two data sets comprises analyzing one or a combination of the following parameters: intensity, contrast, speckle pattern, noise, image sharpness/blur, the position of one or more markers, the position of one or more detected anatomical and/or geometric features, the position and/or orientation of one or more detected edges and/or surfaces.

14. Method according to any of the previous claims, wherein combining the first and second data sets to generate a sonogram comprises replacing data points in one of the first and second data sets belonging to an artifact with corresponding data points of the other of the first and second data sets and/or taking a weighted average of the two data sets and/or taking the maximum intensity from the two data sets and/or fusing the data sets based on local image quality and/or using all of the information in only one of the data sets.
